# EUROPÄISCHE PATENTANMELDUNG

(11) **EP 1 098 273 A2**
(43) Veröffentlichungstag der Anmeldung: **09.05.2001**
(21) Anmeldenummer: 00123702.3
(22) Anmeldetag: 31.10.2000
(51) Int. Cl.: G07F 17/42, G07F 17/16, G06F 17/60, H04L 29/06

(54) **Elektronisches Kartenvorverkaufssystem**

(30) Priorität: 04.11.1999 DE 19953124
(71) Anmelder: Ticket/S AG, 76131 Karlsruhe (DE)
(72) Erfinder: Hoepfner, F.G., Dr., 76131 Karlsruhe (DE)
(74) Vertreter: Geitz, Holger

(57) **Zusammenfassung**

Es sind elektronische Kartenvorverkaufssysteme bekannt, bei denen über unterschiedliche Zugriffsmedien Karten aus einem vorhandenen Kartenpool bestellt werden können. Nachteilig bei derartigen Systemen ist, daß nur die Karten bestellt werden können, die der jeweilige Vorverkaufsbetreiber in seinem Angebot hat. Bei Erschöpfung der Kartenkontingente oder aber für Veranstaltungen, die der jeweilige Vorverkäufer nicht im Programm hat, können auf diesem Weg keine Karten erworben werden.

Das erfindungsgemäße elektronisches Kartenvorverkaufssystem arbeitet mit einem Multi-Media-Server (2), auf dem eine Index-Datenbank (3) abgelegt ist, die jeder Veranstaltung eine eindeutige Kennung (21) zuordnet. Neben den Daten zur Veranstaltung enthält die Index-Datenbank (3) jeweils Informationen über sämtliche angeschlossenen Kartenkontingente und die etwaig erforderlichen Einwählroutinen auf die betreffenden Ticket-Server (5, 5'). Somit können über die zentrale Index-Datenbank (3) sämtliche angeschlossenen Kartenkontingente unterschiedlicher Vorverkaufssysteme angesprochen, abgefragt und gesucht werden. Die Zusammenschaltung bestehender Kartenvorverkaufssysteme über eine zentrale Index-Datenbank (3) gelingt durch ein offenes System verteilter Datenbanken.

Kartenvorverkauf

## Beschreibung

Die Erfindung betrifft ein elektronisches Kartenvorverkaufssystem.

Derartige Systeme gehören seit einigen Jahren zum Stand der Technik und erfreuen sich mit zunehmender Verbreitung des Internets einer wachsenden Beliebtheit.

So ist beispielsweise aus der vorveröffentlichten DE 90 02 281 U1 eine Einrichtung zum Verkauf von Eintrittskarten bekennt, die im wesentlichen zumindest einen Kartenvorverkaufsautomaten mit einer Anzeigeeinrichtung und einem Kartendrucker. Der erwähnte Kartenvorkaufsautomat steht mit einem das jeweilige Kartenkontingent verwaltenden Zentralrechner in Datenverbindung. Nach Prüfung der Verfügbarkeit der gewünschten Karte durch Rückkopplung mit dem Zentralrechner und Abwicklung des Bezahlvorgangs wird ggf. vor Ort an dem Kartenvorverkaufsautomat die betreffende Karte ausgedruckt.

Die vorbekannten Eintrittskartenvertriebssysteme arbeiten je nach Größe mit einer unterschiedlichen Anzahl von Veranstaltern unterschiedlicher Art zusammen.

Dabei übernehmen Sie exklusiv oder in einfacher Lizenz den teilweisen oder gesamten Vertrieb der **Eintrittskarten** für beliebige oder ausgewählte Veranstaltungen. Dabei arbeiten die vorbekannten Eintrittskartenvertriebssysteme grundsätzlich mit einem Zentralrechner, dem sogenannten 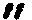 Ticket-Server", der das jeweils zur Verfügung stehende Kartenkontingent zentral verwaltet. Dies bedeutet, daß unabhängig von dem jeweiligen Vertriebsmodus der Karten, ob nun im Wege des e-commerce, des Call-Centers oder der herkömmlichen Veräußerung einer Karte in Papierform im Ergebnis immer eine Datenbewegung auf diesem Ticket-Server entweder in Echtzeit oder zeitversetzt erfolgt.

Sämtliche Kartenvertriebsmodi setzen somit zumindest eine Schnittstelle zu dem erwähnten Ticket-Server voraus. Bei richtigem Verständnis des Systems ist sogar die Abendkasse einer Veranstaltung nichts anderes als die vom Server abgerufene Restkartenmenge. In diesem Falle erfolgt nur die Ausbuchung des entsprechenden Restkartenkontingents aus dem Server zeitlich vor der eigentlichen Veräußerung an den Letztverbraucher.

Nachteilig bei den vorbekannten Kartenverkaufssystemen ist, daß sie trotz ihres breitgefächerten und weitverteilten Angebots letztlich in sich geschlossene Systeme darstellen. Nur die Veranstaltungen, die auf dem erwähnten Ticket-Server abgelegt sind, können von dem jeweiligen Kartenvertriebssystem auch angeboten werden. Dies bedeutet konkret, daß jedes der vorbenannten Eintrittskartenvertriebssysteme nur die Veranstaltungen anbieten bzw. im Programm haben kann, zu deren Vertrieb sie mit dem jeweiligen Veranstalter zusammenarbeiten bzw. befugt sind.

Dabei ist es sowohl für den Veranstalter als auch für den Letztverbraucher einigermaßen umständlich, daß er aufgrund der geschilderten Situation neben der Zusatzinformation über die Veranstaltung selbst zusätzlich immer die Zusatzinformation benötigt, welches Kartenvertriebssystem den Vorverkauf für die betreffende Veranstaltung durchführt. Die Veranstalter versuchen dem zu begegnen, indem sie ihr Kartenkontingent auf mehrere Kartenvertriebssysteme verteilen. Dies mag zwar das Problem verkleinern, aber letztlich stellt es keine Lösung dar. Denn auch bei diesen Lösungen kann jeder Anbieter nur das ihm jeweils zugewiesene Kartenkontingent ausschöpfen und reagiert nach dessen Abverkauf auf weitere Kartenanfragen üblicherweise mit der Verbreitung der objektiv falschen Information, die nachgefragte Veranstaltung sei ausverkauft. Hierdurch versuchen die Veranstalter zu vermeiden, daß ihre Kunden unmittelbar zum direkten Wettbewerb überlaufen. Alternativ versuchen die betroffenen Vertreiber auch, ein weiteres Kartenkontingent vom Veranstalter oder vom Wettbewerber zu erhalten. Dies stellt allerdings auch nur eine Lösung des Problems dar bis auch die Kapazität dieses neuen Kontingents erschöpft ist. Anschließend tritt das Problem unverändert erneut auf.

Dies bedeutet, daß ungeachtet aller technischen Möglichkeiten heutige elektronische Kartenvorverkaufssysteme aufgrund der beschriebenen technisch unvermeidlichen Kontingentbegrenzungen letztlich auf dem Niveau herkömmlicher Vorverkaufsstellen mit einem Kontingent bereits fertig ausgedruckter Tickets agieren. Das Problem wird durch die Größe des Netzwerkes gemildert aber letztlich nicht gelöst.

Es liegt auf der Hand, daß Veranstalter, Verbraucher, aber auch Kartenvorverkaufssysteme an einer Überwindung dieses Zustandes interessiert sind.

Der Erfindung liegt daher die Aufgabe zugrunde, ein elektronisches Kartenvorverkaufssystem zu schaffen, das im Unterschied zu dem beschriebenen Stand der Technik ein offenes System darstellt.

Diese Aufgabe wird durch ein elektronisches Kartenvorverkaufssystem mit den Merkmalen des Hauptanspruchs gelöst. Vorteilhafte Ausgestaltungen dieses neuartigen Kartenvorverkaufssystems ergeben sich aus den nachfolgenden Unteransprüchen.

Die Lösung der erfindungsgemäßen Aufgabe gelingt mittels der **Einrichtung** einer sogenannten 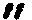 verteilten Datenbank". Den eigentlichen Ticket- und Veranstaltungsdatenbanken wird eine sogenannte Index-Datenbank vorgeschaltet, innerhalb der zu jeder Veranstaltung eine eindeutige Zuordnung, da die Veranstaltung betreffenden Informationen und insbesondere solche Informationen abgelegt sind, die zum Anwählen eines auf einem beliebigen anderen Ticket-Server abgelegten Kartenkontingents erforderlich sind. Es handelt sich dabei in erster Linie um die Informationen über die benötigten Schnittstelle, die benötigten Datentransferprotokolle und die hierzu einzusetzenden Konvertierungsalgorithmen. Diese Indexdatenbank ist auf einem Multi-Media-Server abgelegt, der zusätzlich weitere Daten zu den Veranstaltungen oder selbst entsprechende Kartenkontingente enthalten kann.

Die Indexdatenbank enthält darüber hinaus sogenannte hints oder links auf etwaig im Zusammenhang mit der Anwahl von Kartenkontingenten bzw. Ticket-Servern erforderlichen Identifikations- oder Einwählroutinen erforderlichen Programmmodule.

Der entsprechend ausgestaltete Multi-Media-Server erlaubt es somit, über die Index-Datenbank die jeweils gewünschte Veranstaltung auszuwählen und die zu dieser Veranstaltung insgesamt zur Verfügung stehenden Kartenkontingente abzurufen. Voraussetzung hierfür ist, daß sämtliche Vertriebssysteme ihren jeweiligen Ticket-Server für den genannten Multi-Media-Server freischalten. Nachdem jedoch alle Kartenvertriebssysteme daran interessiert sind, ihre Karten zu verkaufen, liegt die erwähnte Freischaltung im Interesse aller Beteiligten.

Der beschriebene Multi-Media-Server organisiert somit über die genannte Index-Datenbank ein System innerhalb eines oder auf mehrere Server verteilter Datenbanken, das letztlich den Zugriff auf sämtliche angeschlossenen Kartenverteilungssysteme ermöglicht. Jeder der an diesen Multi-Media-Server angeschlossen ist und über die entsprechenden Berechtigungen verfügt, kann somit über das gesamte zu einer Veranstaltung zur Verfügung stehende Kartenkontingent vollständig und gegebenenfalls in Echtzeit verfügen.

Hierzu ist es freilich erforderlich, daß die Index-Datenbank jeweils sämtliche für diesen Vertrieb vorgesehenen Veranstaltungen umfaßt. Die Datenbank wird daher in regelmäßigen Abständen oder in Echtzeit aktualisiert.

Zur Recherche in der genannten Index-Datenbank ist eine Retrieval-Software vorgesehen, die einen Zugriff auf unterschiedliche Felder der in dieser Index-Datenbank angelegten Datenbankelemente erlaubt.

Der Bedienungskomfort der Index-Datenbank kann dadurch erhöht werden, daß ein Thesaurus für zumindest einen Teil der innerhalb der Index-Datenbank recherchierbaren Felder angelegt ist. Hierdurch ist es möglich, daß eine Veranstaltung auch aufgrund von unvollständigen oder teilweise fehlerhaften Informationen aufgefunden werden kann.

Nachdem es im Rahmen der Erfindung durchaus möglich ist, mehrere unterschiedliche Kartenkontingente zur selben Veranstaltung anzubieten, ist es von Vorteil, wenn diese Kartenkontingente mit einer Prioritätskennung versehen werden, wobei der Abverkauf der Kartenkontingente in der Reihenfolge dieser Priorität erfolgt. Die Prioritätskennung kann selbstverständlich auch dazu eingesetzt werden, einen gleichmäßigen Verkauf unter den vorhandenen Kartenkontingenten sicher zu stellen.

Für den Fall, daß zu einer Veranstaltung mehrere Kartenkontingente zur Verfügung stehen, kann dies mit Vorteil dazu genutzt werden, daß für den Fall, daß aus technischen oder sonstigen Gründen eine Buchungs- oder Abfrageaktion nicht möglich ist, das prioritätsrangniedrigere Kartenkontingent abgefragt wird.

Über die Index-Datenbank können neben den zur Buchung der Karte weitere wichtige Informationen im Zusammenhang mit der nachgefragten Veranstaltung abgefragt werden. So können den einzelnen Veranstaltungen Multi-Media-Daten zugeordnet werden, die beispielsweise Informationen über den Veranstaltungsort, die Veranstaltung, den Veranstalter oder auch den Komfort der jeweils nachgefragten Kartenkategorie verdeutlichen.

Besonders vorteilhaft sind dabei sogenannte Plug-Ins, die dazu genutzt werden können, 3-D-Informationen über die Sichtverhältnisse des nachgefragten Platzes für den Benutzer einzuspielen.

Besonders vorteilhaft ist es, wenn die fraglichen Informationen direkt auf dem erwähnten Multi-Media-Server abgelegt sind und die Index-Datenbank neben dem Verweis auf die betreffenden Kartenkontingente einen Verweis auf die in einer Multi-Media-Datenbank abgelegten Multi-Media-Daten aus der betreffenden Veranstaltung enthält und somit im Zusammenhang mit den zum Abverkauf der Karten notwendigen Veranstaltungsinformationen optional oder zwangsläufig zusätzliche Einspielungen wie beispielsweise Bild-, Video- oder Soundsequenzen erfolgen.

Der Multi-Media-Server und die auf ihn aufgespielte Index-Datenbank stellt das Kernstück eines verteilten Datenbanksystems dar, das gleichermaßen von Veranstaltern, Veranstaltungsgesellschaften, Letztverbrauchern sowie anderen Benutzern unterschiedlicher Wertigkeit genutzt werden soll. Darüber hinaus ist zu beachten, daß der Multi-Media-Server auf unterschiedlichsten Kommunikationswegen und -foren angesprochen werden kann. Es ist daher von Vorteil, wenn jede Abfrage der Index-Datenbank mit einer Information über das Ausmaß der jeweiligen Zugriffsberechtigung versehen ist und hiervon die Qualität des Zugriffs auf die Index-Datenbank hinsichtlich der Menge und/oder des Umfangs der jeweils angebotenen Datenbankelemente bestimmt wird.

Ein System derart unterschiedlicher Zugriffsberechtigung kann insbesondere durch die Implementierung unterschiedlicher Schnittstellen, die auf der Index-Datenbank aufsetzen, realisiert werden. Dabei kann es sich bei diesen Schnittstellen um fest verdrahtete Schnittstellen des Multi-Media-Servers oder um Software-Module handeln, die je nach Wertigkeit mit unterschiedlicher Mächtigkeit und unterschiedlichem Komfort auf die Index-Datenbank zugreifen.

So kann die Index-Datenbank über eine qualifizierte Verbraucherschnittstelle angefragt werden. Dies ist üblicherweise der Weg, über den sich Letztverbraucher in die Index-Datenbank einlocken. In Abhängigkeit vom Zugriffsmedium und der Identifikation des Kunden können unterschiedliche Transaktionen abgewickelt werden. So könne dem Kunden beispielsweise ausschließlich Veranstaltungsinformation ausschließlich Buchungsinformationen angeboten werden oder beide Informationen miteinander verbunden werden. Dabei können dem Kunden je nach dessen Qualifikation, beispielsweise Stammkunde oder Erstkunde, unterschiedliche Informationen und/oder Informationsqualitäten sowie Transaktionen angeboten werden.

So kann beispielsweise auf dem Multi-Media-Server zusätzlich eine Preislistendatenbank derart hinterlegt sein, daß zu einzelnen Veranstaltungen unterschiedliche Preisgestaltungen vorgesehen sind. Je nach Kunde oder Zugriffsmedium können unterschiedliche Preisgestaltungen angeboten werden. Hierdurch können bestimmte Zugriffsmedien, die beispielsweise mit einem geringen Verwaltungsaufwand für den Veranstalter verbunden sind, privilegiert werden. Außerdem können Partner der jeweiligen Veranstalter dazu ermächtigt werden, besonders günstige Preise auf ihren Terminals anzubieten.

Ein anderer Zugang als für den Letztverbraucher muß für die Veranstalter eröffnet werden. So ist eine Veranstalterschnittstelle vorgesehen, die zusätzliche Felder der Index-Datenbank zur Recherche frei gibt. Es handelt sich hierbei insbesondere um ein Statusfeld das zeigt, in welcher Phase sich der Vorverkauf befindet sowie ein Ergebnisfeld, das zeigt, wie der Vorverkauf zu der jeweiligen Veranstaltung läuft.

Darüber hinaus ist es von Vorteil, daß neben der Veranstalterschnittstelle eine Kundenschnittstelle vorgesehen ist, die es dem Kunden ermöglicht, selbsttätig Veranstaltungsdaten in das System einzupflegen und zu verändern. So können beispielsweise auch Multi-Media-Daten in die Multi-Media-Datenbank eingepflegt oder in die Preislistendatenbank von derartigen Kunden eingegriffen werden. Schließlich können über die genannte Kundenschnittstelle Daten direkt aus dem System zur Weiterverarbeitung abgezogen werden. Letzteres ist insbesondere zur Übernahme von Verkaufsdaten in eine Finanzbuchhaltung von Vorteil.

Derart privilegierte Kunden werden über die Kundenschnittstelle auch in die Lage versetzt, direkt Karten aus dem System mit einem jeweils modifizierbaren Ausdruck zu beziehen.

Schließlich soll über die Kundenschnittstelle auch eine Verteilfunktion derart gegeben sein, daß Kartenkontingente bestimmten Vorverkaufsstellen zugewiesen oder entzogen werden oder sonstig in die Kartenverteilung eingegriffen wird.

Die zentrale Verwaltung des gesamten Kartenkontingents, die über den genannten Multi-Media-Server möglich ist, erlaubt weitere vorteilhafte Funktionen, die den Ablauf einer Veranstaltung sinnvoll begleiten. So kann beispielsweise eine Versand-Ende-Funktion derart vorgesehen werden, daß mit dem Auslösen dieser Funktion die den einzelnen Schnittstellen zugeordneten Berechnungen derart verändert werden, daß der bisher freie Verkauf dann nur noch einzelnen lokal definierten Schnittstellen möglich ist. Dieses Merkmal ist insbesondere im Zusammenhang mit der Umstellung des Vorverkaufs auf den Abendkassenbetrieb sinnvoll.

In weiterer Ausgestaltung der Erfindung können selbstverständlich weitere Schnittstellen mit jeweils unterschiedlichen Berechtigungen definiert und auf der erwähnten Index-Datenbank aufgesetzt werden.

In abermals vorteilhafter Ausgestaltung ist der Mulit-Media-Server mit einer Transaktionsdatenbank belegt, die zu jeder Datenbanktransaktion ein Datenbankelement mit einem eindeutigen Index erzeugt, wobei innerhalb dieses Datenbankelements insbesondere die Information abgelegt wird, ob die Bezahlung des Vorgangs bereits erfolgt ist oder nicht. Im Falle der elektronischen Bezahlung werden in dem genannten Datenbankelement sämtliche Kundendaten abgelegt.

Die Anlage der Transaktionsdatenbank auf den Multi-Media-Server kann vorteilhaft mit der Preislistendatenbank, die ebenfalls auf dem Multi-Media-Server abgelegt ist derart gekoppelt werden, daß das elektronische Kartenvorverkaufssystem nach entsprechender Vorgabe selbsttätig Rabatte oder Stammkundentarife generieren bzw. gewähren kann.

Nachdem das erwähnte Kartenvorverkaufssystem zur Abwicklung und Verwaltung des gesamten Kartenvertriebs einer Veranstaltung geeignet ist, ist es sinnvoll, den Multi-Media-Server des Systems mit einer Internet-Schnittstelle zu versehen, die es dem Letztverbraucher ermöglicht, den genannten Multi-Media-Server über das Internet derart anzusprechen, daß von hier aus eine Recherche in der Index-Datenbank je nach Berechtigung insbesondere eine Kartenbuchung möglich ist.

Die Erfindung wird nachstehend anhand eines in der Zeichnung nur schematisch dargestellten Ausführungsbeispiels näher erläutert. Es zeigen:

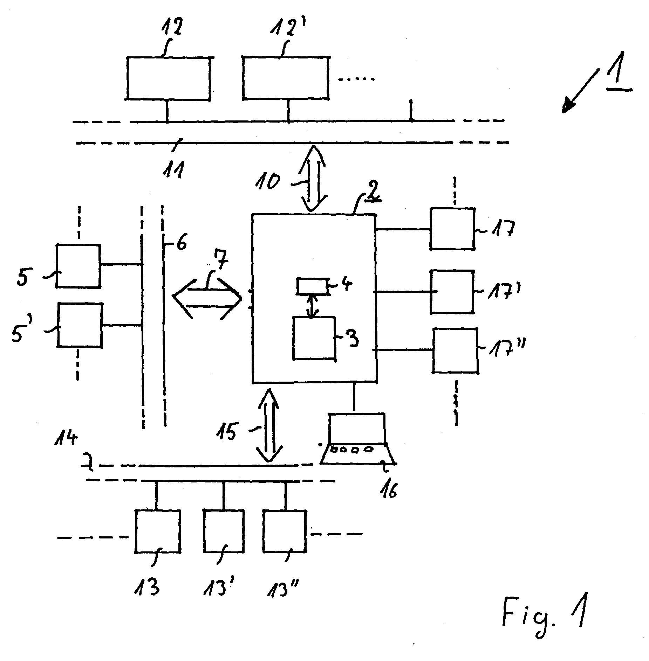

- Fig. 1: ein elektronisches Kartenvorverkaufssystem in einem Blockschaltbild und
- Fig. 2: eine schematische Darstellung zur Datenbankanordnung des elektronischen Kartenvorverkaufssystems

Das erfindungsgemäße elektronische Kartenvorverkaufssystem 1 umfaßt als zentrales Element einen Multi-Media-Server 2, auf den eine Index-Datenbank 3 aufgespielt ist, die von einer CPU 4 angesteuert wird. Auf den Multi-Media-Server 2 können die zu verwaltenden Kartenkontingente vollständig oder teilweise abgelegt werden. Üblicherweise arbeitet der Multi-Media-Server jedoch mit verschiedenen Ticket-Servern 5, 5' zusammen, die über ein offenes Bussystem 6 oder eine geeignete Schnittstelle 7 mit dem Multi-Media-Server 2 in Datenverbindung stehen. Als Bussystem 6 kommen insbesondere offene Bussysteme wie ein CORBA oder CAN-BUS in Frage.

Darüber hinaus weist der Multi-Media-Server 2 eine Internet-Schnittstelle 10 auf und ist hierüber direkt oder über eine Firewall mit dem Internet 11 verbunden. Über das Internet können verschiedene Internet-Clients 12, 12' wie Letztverbraucher, Vorverkaufsstellen oder Veranstalter, also im Ergebnis sämtliche denkbaren Benutzer des elektronischen Kartenvorverkaufssystems sich in den Multi-Media-Server 2 einlocken. Darüber hinaus können SB-Terminals 13, 13', 13'' bzw. Call-Center über das herkömmliche Telefonnetz 14 in eine entsprechende analoge oder digitale Modem-Schnittstelle 15 mit dem Multi-Media-Server verbunden sein.

Der Multi-Media-Server 2 ist darüber hinaus mit einer Reihe weiterer, hier nicht dargestellter Schnittstellen zum direkten oder indirekten Anschluß von weiteren Datennetzen ausgestattet. Insbesondere kann der Multi-Media-Server 2 im Intranet eines hier nicht weiter dargestellten Rechnernetzes betrieben werden. Zusätzlich weist der Multi-Media-Server 2 eine Ein- und Ausgabeinheit 16 zum Support oder zur Pflege der auf dem Multi-Media-Server 2 aufgespielten Daten auf. Schließlich können besonders wichtige User, wie beispielsweise Veranstalter 17, Regionalgesellschaften 17' von Veranstaltern oder direkte Kunden 17'' in direkter Datenverbindung mit dem Multi-Media-Server 2 stehen. Diese direkten Datenverbindungen sind wie alle zuvor genannten Schnittstellen auch über Schnittstellen mit jeweils unterschiedlichen Prioritäten und Berechtigungen auf den Multi-Media-Server 2 aufgeschaltet. Die Art des Zugangs definiert die Art des Zugriffs auf den Multi-Media-Server 2 sowie den Umfang des jeweils zulässigen Zugriffs. Dies bedeutet, daß die Schnittstellen jeweils mit einer eindeutigen Kennung versehen sind und diese Kennung auch von der CPU 4 des Multi-Media-Servers 2 erkannt wird. Die Schnittstellenkennungen sind mit unterschiedlichen Zugriffsrechten auf die Index-Datenbank 3 ausgestattet. Darüber hinaus können auch über dieselbe Schnittstelle zugreifende unterscheidbare User mit unterschiedlichen Zugangsberechtigungen je nach User-Identifikation belegt werden.

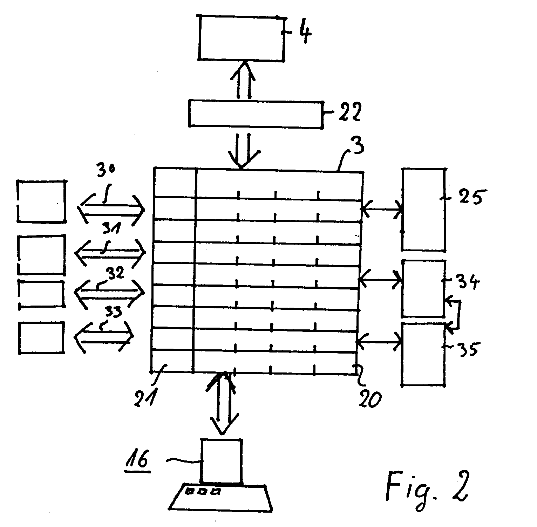

In Fig. 2 ist der Datenbankaufbau der auf dem Multi-Media-Server 2 abgelegten Index-Datenbank 3 näher dargestellt. Die Index-Datenbank 3 besteht im wesentlichen aus Datenbankelementen 20, die in Fig. 2 durch Tabellenzeilen dargestellt sind. Jedes Datenbankelement 20 ist mit einer eindeutigen Kennung dem sogenannten Index 21 versehen. Dabei steht jeder Index 21 für nur eine eindeutig definierte Veranstaltung.

Innerhalb der Multi-Media-Datenbank 3 kann mit einer entsprechenden Retrieval-Software 22 recherchiert werden. Die Retrieval-Software stellt je nach abfragender Schnittstelle bzw. Userkennung unterschiedliche Zugriffsmöglichkeiten in Form von unterschiedlich mächtigen Befehlen und unterschiedlichen Zugriffsberechtigungen auf die Indes-Datenbank zur Verfügung. Der Betrieb der Index-Datenbank wird dabei über die CPU 4 des Multi-Media-Servers 2 abgewickelt.

Der Datenbankbetreiber kann über die Ein-/Ausgabeeinheit 16 jederzeit Datenbankelemente 20 hinzufügen, verändern oder weitere Daten in bestehende Datenbankelemente 20 einpflegen oder sich über den Betrieb der Index-Datenbank 3 informieren. Über die Ein-/Ausgabeeinheit 16 können auch weitere den Betrieb der Index-Datenbank 3 betreffende Informationen wie beispielsweise den Vorverkauf einzelner Veranstaltungen betreffend oder aber die Nachfrage nach der Index-Datenbank 3 insgesamt abgefragt werden.

Die Index-Datenbank 3 steht darüber hinaus in Datenverbindung mit den angeschlossenen Ticket-Servern 5, 5'. Auf diesen Ticket-Servern 5, 5' liegen die zu einer jeweiligen Veranstalung gehörenden Kartenkontingente. Anhand des von der Index-Datenbank 3 übergebenen Indexes 21 und somit der entsprechend eindeutigen Veranstaltungskennung kann das auf dem Ticket-Server 5 oder 5' zu der jeweiligen Veranstaltung gehörende Kartenkontingent direkt angesprochen und abgefragt werden. Dabei weist sowohl der Multi-Media-Server 2 als auch die Index-Datenbank 3 die erforderlichen Schnittstellen zur Datenverbindung mit den jeweiligen Ticket-Servern 5, 5' auf.

Anhand der eindeutigen Veranstaltungskennung , dem Index 21, können gezielt etwaig weitere Informationen zum Veranstalter bzw. zur jeweiligen Veranstaltung von anderen Servern 24 bezogen werden. Hierbei kann es sich beispielsweise um einen Server zur Speicherung von Multi-Media-Daten handeln, die Bild-, Video- oder Sound-Effekte zu einer bestimmten Veranstaltung überspielen. Hierzu werden bevorzugt Plug-Ins engesetzt. Schließlich steht die Index-Datenbank mit einer sogenannten Preislisten-Datenbank 25 in Datenverbindung. Innerhalb der Preislisten-Datenbank 25 sind zu jeder Veranstaltung zumindest eine Preisliste, möglicherweise auch mehrere Preisgestaltungen abgelegt. Welche Preisliste jeweils angeboten wird, kann sich nach dem Nachfragemedium, dem Anfragenden oder aber dem Zeitpunkt des Vorverkaufs richten. Jedenfalls besteht über die Preislisten-Datenbank 25 die Möglichkeit, einer Veranstaltung mehrere Preisgestaltungen zuzuordnen und die in Abhängigkeit von bestimmten Bedingungen auszuwählen.

Auf die Preislisten-Datenbank 25 wird von unterschiedlichen Benutzern mittels unterschiedlicher Kommunikationswege zugegriffen. Es kann sich dabei um sogenannte Veranstalter-Schnittstelle 30 handeln. Diese Schnittstelle 30 ermöglicht es dem Veranstalter, den Status des Vorverkaufs abzufragen. Hierunter ist zu verstehen, ob der Vorverkauf bereits begonnen hat, beendet ist oder zwischenzeitlich ausgesetzt wurde. Darüber hinaus kann abgefragt werden, ob bereits Abrechnungen erfolgt sind. Über diese Schnittstelle kann auch das Ergebnis des Vorverkaufs abgefragt werden. Schließlich können Mustertickets sowie die Karteneinteilung nach Platzkategorien abgefragt werden. Schließlich kann über die Veranstalterschnittstelle eingesehen werden, ob und wie die jeweilige Veranstaltung im Internet angekündigt wird und gegebenenfalls entsprechende Seiten eingepflegt werden.

Über die Master-Veranstalterschnittstelle 31 können über die genannten Möglichkeiten hinaus Möglichkeiten zum Einpflegen von weiteren Veranstaltungen wahrgenommen werden. Die Schnittstelle umfaßt ein Interface zur Neuanlage von Veranstaltungen, Künstlern und Veranstaltungsorten wobei die jeweils eingegebenen Daten zunächst der Freigabe bedürfen. Es können Multi-Media-Daten direkt in die angeschlossene Multi-Media-Datenbank 35 eingegeben werden. Es können individuelle Preisgestaltungen eingegeben oder Veranstaltungsgruppen gebildet werden. Innerhalb dieser Veranstaltungscluster können zusammenfassende Abfragen zu mehreren Veranstaltungen gleichzeitig durchgeführt werden.

Schließlich können alle zur Finanzbuchhaltung notwendigen Daten direkt aus der Index-Datenbank 3 oder den angeschlossenen Datenbanken abgezogen werden. Es kann auch konkret eine Abrechnung mit dem Anbieter der Index-Datenbank bzw. ein Zwischenstatus abgefragt werden. Die Master-Veranstalterschnittstelle 31 ermöglicht überdies den Ausdruck von Testkarten, Presse- und Ehrenkarten sowie Karten mit freier Preisgestaltung die gegebenenfalls auch ohne Preisangabe abgerufen bzw. ausgedruckt werden können. Schließlich umfaßt die Master-Veranstalterschnittstelle 31 eine Verteilfunktion mit der bestimmte Kontingente reserviert, zurückgelegt oder bestimmten Stellen innerhalb des angeschlossenen Netzes zugewiesen werden können.

Die Master-Veranstalterschnittstelle 31 enthält schließlich die Berechtigung zur Übermittlung des sogenannten Versand-Endebefehls. Dieser Befehl ermöglicht es, daß nur noch bestimmte Stellen zum Vorverkauf freigeschaltet werden. Dies bedeutet, daß die Master-Veranstalterschnittstelle die Berechtigung anderer Schnittstellen aktiv verändern kann.

Hierdurch kann der Vorverkauf beendet und die sogenannte Abendkassenfunktion aufgerufen werden. In diesem Zustand können über alle Schnittsellen zwei weiter bestimmte Veranstaltungsinformationen auch über die Index-Datenbank 3 abgefragt werden, aber der Vorverkauf selbst ist nur noch bestimmten Stellen, nämlich den Abendkassen, möglich.

Schließlich gibt es noch die Spezial-Veranstalterschnittstelle 32. Diese Schnittstelle 32 wird zum Betrieb von SB-Terminals oder Vorverkaufsstellen in der Regel direkt am Veranstaltungsort genutzt. In der Regel sind diesen 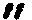 Stand-alone-Terminals" bestimmte Kontingente direkt zugewiesen, die aus einem lokalen Speicher direkt abgerufen werden können. Diese 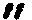 Stand-alone-Terminals" zeichnen sich somit durch eine hohe Geschwindigkeit gegenüber der ansonsten erforderlichen Interaktion des Gesamtsystems aus.

Schließlich ist die Index-Datenbank 3 über die BenutzerSchnittstelle 33 anzusprechen die es ermöglicht, innerhalb der Index-Datenbank sämtliche Veranstaltungsdaten zu recherchieren, wobei der Multi-Media-Server 2 je nach Nachfragemedium bestimmte Informationen frei gibt oder sperrt. So werden Multi-Media-Daten nicht bei einer Fax-Anfrage frei gegeben. Für die Benutzer-Schnittstelle 33 können schließlich auch Karten zu den jeweiligen Veranstaltungen bezogen werden.

Zur Abwicklung der eigentlichen Abrechnung ist die Index-Datenbank 3 zusätzlich mit einer Transaktions-Datenbank 34 verbunden. Dieser Datenbank ist jede Transaktion, also insbesondere jede Kartenbestellung mit einer Kennung 10 sowie das Datum der letzen Änderung jedes Datensatzes eingetragen. Hierdurch ist es möglich, alle vor einem gewissen Zeitpunkt abgespeicherten Datensätze zu bearbeiten bzw. abzurechnen. In der Transaktions-Datenbank werden insbesondere dann sämtliche Kundendaten abgelegt, wenn die Bezahlung über Cyber-Cash oder per Kreditkarte erfolgt ist. Die Kundeninformationen sind auch für die Gewähr von etwaigen Rabatten erforderlich. Insoweit erfolgt ein Abgleich zwischen der Index-Datenbank 3 und der Preislisten-Datenbank 34 über die CPU 4.

Da die Index-Datenbank mit mehreren Ticket-Servern 5, 5' verbunden sein kann, können zu jeder Veranstaltung mehrere Kontingente abgelegt sein. Somit sind die in der Index-Datenbank abgelegten Anwahlroutinen der einzelnen Ticket-Server 5 oder 5' mit Prioritätskennungen versehen, die sicherstellen, in welcher Reihenfolge die einzelnen Ticket-Server abgefragt bzw. gebucht werden.

Somit ist ein elektronisches Kartenvorverkaufssystem beschrieben, das als Zentralsystem zwischen den bestehenden elektronischen Kartenvorverkaufssystemenden eingesetzt werden kann. Dies gelingt durch ein verteiltes Datenbanksystem, in dessen Zentrum eine sogenannte Index-Datenbank 3 auf einem Multi-Media-Server 2 verwaltet wird. Die zentrale Verwaltung der Kartenkontingente und sonstiger Daten auf der Index-Datenbank 3 ermöglicht dem Benutzer, den Zugriff auf sämtliche angeschlossenen vorhandenen Kartenkontingente und erlaubt es den angeschlossenen elektronischen Kartenvorverkaufssystemen nahezu alle Verbraucher zu erreichen. Das erfindungsgemäße elektronische Kartenvorverkaufssystem erhöht somit den Bedienkomfort von Veranstalter, Kartenvorverkäufer und den Letztverbraucher selbst und hat daher im Ergebnis einen erheblichen Akzeptanz-Vorteil gegenüber bestehenden Systemen.

### BEZUGSZEICHENLISTE

- 1: Elektronisches Kartenvorverkaufssystem
- 2: Multi-Media-Server
- 3: Index-Datenbank
- 4: CPU
- 5,5': Ticket-Server
- 6: Bus
- 7: Schnittstelle
- 10: Internet-Schnittstelle
- 11: Internet
- 12,12': Internet-Klein
- 13,13',13'': SB-Terminal
- 14: Telefonnetz
- 15: Modem-Schnittstelle
- 16: Ein- und Ausgabeeinheit
- 17: Veranstalter
- 17': Regionalgesellschafter
- 17'': Kunden
- 20: Datenbankelement
- 21: Index
- 22: Retrieval-Software
- 24: weiterer Server
- 25: Preislisten-Datenbank
- 30: Veranstalter-Schnittstelle
- 31: Master-Veranstalterschnittstelle
- 32: Spezial-Veranstalterschnittstelle
- 33: Benutzer-Schnittstelle
- 34: Transaktions-Datenbank
- 35: Multi-Media-Datenbank

## Patentansprüche

1. Elektronisches Kartenvorverkaufssystem zum Vertrieb von Eintrittskarten für Veranstaltungen mit
einem Multi-Media-Server (2),
der zum Anschluß weiterer Server, insbesondere zum Anschluß von unterschiedlichen Ticket-Servern (5, 5'),
über entsprechende Schnittstellen (7) versehen ist und auf dem eine Index-Datenbank (3) zur Auswahl der jeweils interessierenden Veranstaltung und zum Aufruf der jeweils benötigten und/oder freigegebenen Kartenkontingente aufgespielt ist und
deren Datenbank-Elemente (20) hierzu die jeweilige Veranstaltung charakterisierende Veranstaltungsinformationen enthält,
die einem eindeutigen Veranstaltungsindex (21) zugeordnet sind,
wobei diesem Veranstaltungsindex (21) zusätzlich die zur Aus- und Anwahl des jeweils benötigten Ticket-Servers (5, 5') und/oder weiterer Server, benötigte Schnittstellen-Informationen,
sowie die zum Aufruf der zum Einloggen in den jeweiligen Server benötigten Authentifikationsroutinen und/oder Konvertierungsalgorithmen erforderlichen Datentransfer-Informationen eindeutig zugeordnet sind.

2. Elektronisches Kartenvorverkaufssystem nach Anspruch 1, dadurch gekennzeichnet, daß die Index-Datenbank (3) in regelmäßigen vorbestimmbaren zeitlichen Abständen oder ständig derart aktualisiert wird, daß zumindest nach der jeweiligen Aktualisierung, zu jeder innerhalb des Multi-Media-Servers (2) und/oder den angeschlossenen Servern gespeicherten Veranstaltungsdaten wenigstens ein Element (20) in der Index-Datenbank (3) mit einem eindeutigen Veranstaltungsindex (21) und den dazugehörenden Informationen abgelegt ist.

3. Elektronisches Kartenvorverkaufssystem nach Anspruch 1 oder 2, dadurch gekennzeichnet, daß die Index-Datenbank (3) mit einer Retrieval Software (22) versehen ist, die einen Zugriff auf unterschiedliche Felder des jeweiligen Datenbankelements (20) erlaubt.

4. Elektronisches Kartenvorverkaufssystem nach Anspruch 3, dadurch gekennzeichnet, daß die Retrieval-Software (22) der Index-Datenbank (3) einen Thesaurus für zumindest einen Teil der recherchierbaren Felder der Index-Datenbank (3) aufweist.

5. Elektronisches Kartenvorverkaufssystem nach einem der vorhergehenden Ansprüche, dadurch gekennzeichnet, daß die Datenbankelemente (20) der Index-Datenbank (3) für den Fall mehrerer unterschiedlicher Kartenkontingente zur selben Veranstaltung sämtliche Informationen zur Anwahl jedes dieser Kartenkontingente enthalten, wobei jeder der zu einem Kartenkontingent gehörenden Informationsblöcke mit einer vorbestimmbaren Prioritätskennung versehen ist, der die Reihenfolge, in der die Kartenkontingente angeboten werden, festlegt.

6. Elektronisches Kartenvorverkaufssystem nach Anspruch 5, dadurch gekennzeichnet, daß nach einer vorbestimmten Anzahl erfolgloser Buchungs- oder Abfrageaktionen, der auf einem Server abgelegten Informationen, das Kartenkontingent mit der jeweils nachfolgenden Prioritätsstufe abgefragt wird.

7. Elektronisches Kartenvorverkaufssystem nach einem der vorhergehenden Ansprüche, dadurch gekennzeichnet, daß in der Index-Datenbank (3) zusätzlich zumindest einem Teil der Datenbankelemente (20) eine Multimedia-Information zum Aufruf etwaig zu der jeweils nachgefragten Veranstaltung auf dem Multi-Media-Server (2) und/oder angeschlossenen Servern (5, 5') abgelegten Multi-Media-Daten zugeordnet ist.

8. Elektronisches Kartenvorverkaufssystem nach Anspruch 7, dadurch gekennzeichnet, daß die es sich bei den Multi-Media-Daten um Plug-Ins handelt.

9. Elektronisches Kartenvorverkaufssystem nach Anspruch 7 oder 8, dadurch gekennzeichnet, daß auf dem Multimedia-Server (2) zusätzlich eine Multi-Media-Datenbank (35) mit Multi-Media-Daten, vorzugsweise Bild-, Video oder Sounddateien, abgelegt ist und eine eindeutige Zuordnung zwischen den Datenbank Elementen (20) der Multi-Media-Datenbank (35) und der Index-Datenbank (3) besteht.

10. Elektronisches Kartenvorverkaufssystem nach einem der vorhergehenden Ansprüche, dadurch gekennzeichnet, daß auf den Multi-Media-Server (2) ein hierachischer Zugriff derart möglich ist, daß jede Abfrage der Index Datenbank (3) mit einer Information über das Ausmaß der jeweiligen Zugriffsberechtigung versehen ist und hiervon die Qualität des Zugriffs auf die Index-Datenbank (3) hinsichtlich der Menge und/oder des Umfangs der jeweils angebotenen Datenbankelemente (20) bestimmt wird.

11. Elektronisches Kartenvorverkaufssystem nach Anspruch 10, dadurch gekennzeichnet, daß die Index-Datenbank (3) mit Schnittstellen (25, 30, 31, 32, 33, 34) unterschiedlicher Wertigkeit versehen ist.

12. Elektronisches Kartenvorverkaufssystem nach Anspruch 11, dadurch gekennzeichnet, daß die Index-Datenbank (3) mit einer qualifizierten Benutzerschnittstelle (33) derart versehen ist, daß innerhalb der Index-Datenbank (3) zumindest ein Teil der verfügbaren Datenbankelemente (20) recherchierbar und sämtliche zum Kartenvorverkauf erforderlichen Transaktionen abwickelbar sind, wobei Art und Umfang des Zugriffs vom Zugriffsmedium und/oder der Kundenideritifikation abhängig definierbar ist.

13. Elektronisches Kartenvorverkaufssystem nach Anspruch 10, dadurch gekennzeichnet, daß auf dem Multi-Media-Server (2) zusätzlich eine Preislisten-Datenbank (25) derart abgelegt ist, daß zu jeder Veranstaltung unterschiedliche Preisgestaltungen innerhalb dieser Preislisten-Datenbank (25) ablegbar sind, wobei in Abhängigkeit vom Zugriffsmedium und/oder der Kundenidentifikation eine bestimmte Preisgestaltung der jeweiligen Veranstaltung zugeordnet ist.

14. Elektronisches Kartenvorverkaufssystem nach Anspruch 11, dadurch gekennzeichnet, daß die Index-Datenbank (3) mit einer Veranstalterschnittstelle (30) derart versehen ist, daß über diese Schnittstelle zusätzliche Felder der Datenbankelemente , inbesondere ein Statusfeld sowie ein Ergebnisfeld zum Verlauf des laufenden Vorverkaufs recherchierbar sind.

15. Elektronisches Kartenvorverkaufssystem nach Anspruch 13 oder 14, dadurch gekennzeichnet, daß die Index-Datenbank (3) mit einer Master-Veranstalterschnittstelle (31) derart versehen ist, daß über diese Schnittstelle zusätzlich zu den Möglichkeiten der Veranstalterschnittstelle ein Interface zum Einpflegen von Veranstaltungsdaten in die Index-Datenbank (3), zum Aufspielen von Multi-Media Daten in die Multi-Media Datenbank (35) und/oder in die Preislisten-Datenbank (25) gegeben ist sowie ein Online-Bezug von vorbestimmbaren Daten aus den genannten Datenbanken möglich ist.

16. Elektronisches Kartenvorverkaufssystem nach Anspruch 15, dadurch gekennzeichnet, daß über die Kundenschnittstelle (31) ein Direktbezug von Karten mit veränderlichem Aufdruck möglich ist.

17. Elektronisches Kartenvorverkaufssystem nach Anspruch 15 oder 16, dadurch gekennzeichnet, daß über die Master-Veranstalterschnittstelle (31) eine Verteilfunktion derart gegeben ist, daß durch entsprechende Eintragungen in der Index-Datenbank (3) Zugriffsberechtigungen veränderbar und /oder aufhebbar sind und/oder die Zuordnung von Kartenkontingenten veränderbar ist.

18. Elektronisches Kartenvorverkaufssystem nach einem der Ansprüchen 15-17, dadurch gekennzeichnet, daß über die Master-Veranstalterschnittstelle (31) eine Versand-Ende-Funktion derart gegeben ist, daß mit dem Auslösen dieser Funktion die den einzelnen Schnittstellen zugeordneten Berechtigungen derart verändert werden, daß der bisher freie Verkauf nur noch einzelnen lokal definierten Schnittstellen möglich ist, während den übrigen Schnittstellen der Zugriff zu sämtlichen vom Verkauf unabhängigen Veranstaltungsinformationen erhalten bleibt.

19. Elektronisches Kartenvorverkaufssystem nach einem der vorhergehenden Ansprüche, dadurch gekennzeichnet, daß weitere Schnittstellen mit jeweils unterschiedlichen Berechtigungen je nach Zugriffsmedium und/oder Zugriffsberechtigung definierbar sind und in der Index-Datenbank (3) implementierbar sind.

20. Elektronisches Kartenvorverkaufssystem nach einem der vorhergehenden Ansprüche, dadurch gekennzeichnet, daß auf dem Multi-Media-Server (2) eine Transaktionsdatenbank (34) angelegt ist, die zur jeder Transaktion ein Datenbankelement mit einem eindeutigen Index, einer Kennung, ob die Bezahlung erfolgt ist oder nicht sowie im Falle einer elektronischen Bezahlung sämtliche Kundendaten.

21. Elektronisches Kartenvorverkaufssystem nach Anspruch 20, dadurch gekennzeichnet, daß die Transaktionsdatenbank (34) mit der Preislisten-Datenbank (25) derart koppelbar ist, daß selbsttätig Rabatte oder Stammkundentarife generierbar sind.

22. Elektronisches Kartenvorverkaufssystem nach einem der vorhergehenden Ansprüche, dadurch gekennzeichnet, daß der Multi-Media-Server (2) eine Internet-Schnittstelle (10) aufweist und über herkömmliche Internet-Protokolle derart ansprechbar ist, daß sich sämtliche Benutzer über das Internet (11) auf den Multi-Media-Server (2) direkt zugreifen können, wobei Umfang und Qualität des Zugriffs von der in der Abhängigkeit einer vorgeschalteten Identifikationsroutine zugewiesenen Schnittstelle abhängt.
